(19)

**Europäisches Patentamt**

**European Patent Office**

**Office européen des brevets**

(11) **EP 4 527 807 A1**

(12) **EUROPEAN PATENT APPLICATION**

(43) Date of publication:
26.03.2025 Bulletin 2025/13

(21) Application number: 23199318.9

(22) Date of filing: 25.09.2023

(51) International Patent Classification (IPC):
$C03C\ 3/066^{(2006.01)}$  $C03C\ 3/068^{(2006.01)}$
$C03C\ 8/04^{(2006.01)}$  $C03C\ 8/06^{(2006.01)}$
$C03C\ 8/08^{(2006.01)}$  $C03C\ 8/14^{(2006.01)}$
$C03C\ 8/16^{(2006.01)}$  $C03C\ 8/20^{(2006.01)}$
$C03C\ 17/00^{(2006.01)}$  $C03C\ 17/34^{(2006.01)}$

(52) Cooperative Patent Classification (CPC):
**C03C 8/14; C03C 3/066; C03C 3/068; C03C 8/04;
C03C 8/06; C03C 8/08; C03C 8/16; C03C 8/20;
C03C 17/007; C03C 17/3411;** C03C 2217/452;
C03C 2217/477; C03C 2217/485

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SCHOTT AG**
**55122 Mainz (DE)**

(72) Inventors:
• HOVHANNISYAN, Martun
  55122 Mainz (DE)
• MENKE-BERG, Yvonne
  5512 Mainz (DE)
• HOINKIS, Nina
  55122 Mainz (DE)
• KEMPKES, Christian
  55122 Mainz (DE)

(74) Representative: **Schott Corporate IP
Hattenbergstraße 10
55122 Mainz (DE)**

(54) **COATED GLASS PANE AND PASTE AND PROCESS FOR PRODUCING SUCH A COATED GLASS PANE**

(57)    The present disclosure relates to a coated glass pane suited for use as a cover, for example in home appliances, as well as to a paste and a process for producing such a coated glass pane.

Fig. 1

**Description**

Field of invention

The present disclosure relates to a coated glass pane suited for use as a cover, for example in home appliances, as well as to a paste and a process for producing such a coated glass pane.

Background of invention

The invention relates to coated glass panes in general. Coated glass panes are used, for example, as covers, especially in home appliances, for example as cooktop panels or oven doors or display covers and the like. Usually, these glass panes comprise a coating deposited on at least one of the side faces of such a pane, often as a frame that is applied adjacent to the circumferential edge of the glass pane. The coating obstructs the view through the otherwise transparent glass pane, thus concealing elements arranged behind the coated glass pane.

Home appliances usually referred to as "white goods", due to white traditionally being the most frequently used colour for home appliances such as, for example, refrigerators, washing machines, dish washers, and the like. Thus, in order to blend in with other components of a home appliance, the colour of the coating of a coated glass pane usually is white.

While white coatings are frequently applied in home appliances, they are very often applied in the form of so-called front-side coatings, that is, coatings that are suited and designed for being exposed to rather harsh conditions, such as abrasion, scratching and/or dirt. Also, depending in the nature of a specific application, white coatings may comprise organic or inorganic binders. Further, it has to be kept in mind that in a white coating, the white colour is imparted by way of light scattering, in contrast to absorption in chromatic, that is, non-white, coatings. This results in rather high coating thicknesses in order to provide for a white opaque coating.

While white is often regarded as an achromatic colour, this is not entirely true, as white coatings usually show a hue, for example a yellow or blue hue, even though still being located in the "white zone" of a colour system. While a slightly yellow hue of a white coating or any white component may be associated with aging and deterioration, a slightly blueish tint of a coating that is otherwise still perceived as white is often associated with a very clean and fresh impression. Therefore, white coatings often comprise not only a white pigment or a combination of white pigments and/or fillers, but often other inorganic pigments in order to impart a special, mostly blueish, hue to the coating. Also, in order to provide for a sufficient opacity or optical density of the white coating, such coatings may comprise a filler and/or a so-called "opacifier" in addition to the white pigment(s) and, if present, a blue pigment.

For example, US patent application US 2013/0092049 A1 relates to a white inorganic coating composition comprising a first inorganic material with a refractive index that is less than 1.6 and a second inorganic material with a refractive index of more than 2.3, as well as a blue pigment. The first inorganic material may comprise silicon oxide, lead oxide, boron oxide, aluminum oxide, bismuth oxide or combinations thereof, while the second inorganic material may comprise $TiO_2$, $ZrO_2$ or combinations of these. Further, the blue pigment may be a so-called "ultramarine" pigment, a cobalt-blue pigment or a combination thereof. The blue pigment is present in amounts of at most 1.5 % in weight. The coating may be used in plasma display panels as a reflective coating.

European patent EP 1108691 B1 relates to an enamel composition for providing a reflective white coating for a plasma display panel. Also, this patent relates to the improved wettability of white pigments. Examples of white pigments include $TiO_2$ such as rutile (imparting a slightly blueish tint) and anatase (imparting a slightly yellow tint) as well as $SnO_2$, $ZrSiO_4$ (zircon) and $BaSO_4$. The coating may comprise a combination of at least two white pigments. Further, the coating may also comprise so-called opacifiers.

CN 108641479 B relates to ceramic inks, in particular to an ultra-white ceramic ink for inkjet printing and a preparation method thereof. The main component of the white ceramic ink is a boehmite powder that imparts a white colour together with a calcined zinc oxide and an auxiliary inorganic powder. The ink may be applied via screen-printing.

US Patent 5 719 091 A relates to tableware comprising a white coating and describes the use of a zirconia-based opacifier.

International patent application WO 2016/175871 A1 relates to white inks comprising a white metal oxide pigment and a fumed oxide particulate.

For front side coatings, that is, coatings that are applied to that face of a pane that, in use, faces the user and is such exposed to mechanical abrasion, scratching, and/or dirt, the colour of the coating is the result of the coating components, i.e., the pigment(s), filler(s) und opacifier(s) (if present) and the binder and the interaction between these components. However, in case the coating is a so-called back-side coating, that is, applied on that face of the pane that is, in use, protected by the glass pane itself, a different situation arises. Such coatings usually face less severe mechanical loads, but the colour may be affected by the substrate material, that is, of the glass material.

However, none of the coatings of the state of the art addresses this problem of back-side white coatings.

Therefore, there is a need for improved back-side coatings on soda-lime glass substrates.

Object of invention

The object of the invention is to provide a coated glass pane with a white colour and a high brightness, especially a coated glass pane for a home appliance or piece of furniture, that overcomes the problems of the state of the art-coatings at least partially. Further, other aspects relate to a paste and a process for producing such coated glass panes, as well as to the use of such a coated glass pane.

Summary of invention

The object of the invention is solved by the subject-matter of the independent claims. Advantageous and special embodiments are disclosed in description, dependent claims and drawings.

The disclosure therefore relates to a coated glass pane, especially a coated glass pane for a home appliance or piece of furniture, comprising:

- a glass pane comprising two side faces and a circumferential edge and
- at least one coating deposited on at least one of the side face in at least a portion thereof,

wherein the glass pane is a soda-lime glass pane having a thickness between at least 3 mm and at most 8 mm, wherein the coating is an enamel coating comprising at least one glass component, a white pigment and at least two inorganic pigments,
wherein the coating comprises two sublayers,
and wherein the colour of the coated glass pane in the at least one portion measured through the glass pane is given by the following colour coordinates in the CIEL*a*b*-system:

$$-0.4 < a^* < 0.4$$

$$0 < b^* < 3$$

$$L^* > 60.$$

In the scope of the disclosure, the L* value, the a* value and the b* value of the CIELAB colour space are preferably determined using KONICA MINOLTA spectrophotometer CM-700d according to the knowledge of the skilled person with the enamel coating layer facing downwards. The instrument utilizes the di:8° / de: 8° geometry conforming to CIE No 15, ASTM E1164, DIN 5033 Teil 7, ISO 7724/1, and JIS Z8722-1982 (diffused illumination, 8-degree viewing angle) standards, and offers measurement with automatic SCI (specular component included) and SCE (specular component excluded) switching.

Such a coated glass pane is particularly advantageous.

The colour of the coated glass pane is, in the at least one portion that comprises the coating, given within the rage of the colour coordinates in the CIEL*a*b*-system as indicated above and, therefore, blends in will within standard white home appliances. In particular, within the indicated range, the coated glass pane does not have a greyish hue or tint. Also, the brightness of the coating, indicated by the L* value, is rather high, such that the coated glass pane is perceived as "white" and not greyish.

It is noted there that the above colour of the coating is, of course, measured in a portion of the coated glass pane where no further layers or coatings are present apart from a possible "back side coating" on top of the at least one coating. That is, the resulting colour is a product of the glass pane material and the coating.

The coating according to the disclosure also comprises at least one sublayer. This is sufficient in order to provide a suitable optical density and a high L* value, at least in case the glass pane has a rather low thickness of less than 4.5 mm. In case of higher glass pane thicknesses, however, it may be preferred that the coating comprises the at least one sublayer and a further sublayer. This is a very easy and efficient way to provide a high optical density and a high L* value as well as a high gloss, especially in case of higher glass pane thicknesses. This is due to the fact that, generally, a high glass pane thickness corresponds to a higher tint of the glass pane to be coated. According to embodiments, the coating may comprise a further sublayer and also, according to an embodiment, more than two sublayers. This configuration of the coating, i.e. that it comprises two or more sublayers, is very advantageous, as in this way, it is possible to obtain a high optical density of the coating, that is, an opaque coating, especially in case of a stronger tint of the glass pane to be coated and/or a higher glass pane thickness (which, of course, may correspond to a higher tint). As pointed out in detail above, obtaining a white, opaque coating is not easy to accomplish, as white pigments are non-absorbing pigments. Thus, in general, rather high coating thicknesses of white coatings are necessary in order to achieve a sufficient optical density of a white coating or, in the alternative, high pigment contents in the coating. A high pigment content however may constitute a problem with respect to mechanical stability and/or adhesion of the coating, especially in case of a high coating thickness. However, coating of glass panes, especially in case of laterally structured coatings that are applied only in a portion of a side face of a glass pane, usually are applied in printing processes, such as screen printing.

Here, coating thicknesses are limited as a result of the screen used which usually is selected in order to provide for a high resolution of the coated pattern while ensuring a good overall coating quality. This leads to single-layer white coatings that, in general, are rather thin, so that in order to ensure a good opacity (and, thus, high optical density) a high concentration of white pigment(s) in the coating (and corresponding paste) is required. However, this has the drawback of the coating not being very resistant to scratching and abrasion.

The inventors found, however, that these drawbacks can be overcome in a very quick and simple manner by applying the coating in such a way that at least two sublayers result. This may for example be accomplished by printing a first sublayer, drying the first sublayer, printing a second layer, drying the second sublayer, and firing the glass pane and the coating comprising the first and second sublayer. However, it has also been found that such a coating design in which the coating comprises at least two sublayers is not always necessary. However, it may be of particular advantage depending on the thickness of the glass pane to be coated, as has also been explained further above. Of course, generally, without being limited to any of the special embodiments described in the present disclosure, it is also possible to apply more than two sublayers so that the resulting coating comprises more than just two sublayers. However, in general, two sublayers may already be sufficient for achieving a suitable optical density in case the glass pane has a thickness of at least 4.5 mm. In that case, according to an embodiment, the thickness is of the glass pane is at least 4.5 mm and the coating comprises the at least one sublayer and a further sublayer, which helps to provide a high opacity, a high brightness (L*) and a good gloss.

The glass pane of the disclosure is a soda-lime glass pane, that is, a glass pane (or glass plate) that comprises a glass having a soda-lime glass composition. Soda-lime glasses are common glass materials and thus available at low cost and in any suitable size and shape. The starting materials for such low cost soda-lime glass substrates may contain transition metal oxides impurities and thus impart a slight colour tint to the otherwise transparent substrate, e.g. a slightly greenish tint, with some iron oxide impurity from the starting material used.

Generally, the glass pane of the disclosure may also be described as plate shaped, that is, one of its outer dimensions in parallel to a first direction in a Cartesian coordinate system is smaller by at least one order of magnitude than the two other outer dimensions in parallel to the two further directions of the Cartesian coordinate system. The first outer dimension may also be denoted as the pane thickness, the other two outer dimensions may be denoted as length and width. In other words, the thickness of the glass pane is smaller by at least one order of magnitude than its length and width. The glass pane may in general be a flat pane, or may be bent uni- or bidirectionally. The glass pane comprises two side faces which may also be understood and denoted as "principal surfaces" of the glass pane, as these side faces constitute more than half of the total of the overall surface of the glass pane. Further, the glass pane comprises a circumferential edge.

The thickness of the glass pane generally is between at least 3 mm and at most 8 mm, which is favourable as in that way, a high mechanical strength of the glass pane is provided.

The coating of the disclosure generally is an enamel coating, that is, comprises at least one glass component. The glass component may be understood as the binder of the coating and is obtained by melting a glass frit, that is, a glassy powder that melts during firing of the coating at a temperature of several hundred °C. Enamel coatings for glass panes are widely known in the art and result in temperature-resistant and chemically stable coatings.

The coating of the disclosure may be applied so as to cover all of the side face or in a laterally structured way, that is, being applied only to a portion thereof. In the latter case, it may be contemplated to apply the coating as a frame and/or in a dot pattern, for example a dot pattern.

Apart from the at least one glass component, the coating also comprises a white pigment and at least two inorganic pigments.

In the sense of the disclosure, it is understood that "pigment" relates to a powder of a solid compound. Inorganic pigments are, in the context of the disclosure, solid compounds that are suited to impart a colour to a material via physical mechanisms as absorption and/or wavelength dependent scattering of electromagnetic radiation in the visible range, i.e., in the range of 380 nm to 780 nm, especially in the range from 400 nm to 700 nm. These inorganic pigments are usually classified into colour groups according to the colour, they impart to a material. For example, inorganic pigments are pigments such as "blue", "red", "green", "yellow" or "black" pigments (it is to be noted here that in the scope of the invention, "blue", "red", "green", "yellow" or "black" pigments may also, for the sake of simplicity, be called blue, red, green, yellow or black pigments). Very often, these inorganic pigments are metal oxides or mixed metal oxides or hydroxides, for example oxides with a spinel structure. Such pigments may also be called "spinel pigments". Examples of spinel pigments include, but are not limited to, "Thénard's Blue" and "Rinmann's Green". In contrast, white pigments impart a colour via light scattering. Often, white pigments are high refractive index materials such as $TiO_2$ which is a very common white pigment, either as Rutile or as Anatase. A further common material used as a white pigment is $ZrO_2$. In the disclosure, it is understood that a coating comprising a pigment means that the coating comprises particles having the pigment composition. For example, a coating comprising $TiO_2$ as a white pigment comprises particles having the pigment composition or, in other words, comprises $TiO_2$ particles.

For front-side coatings, coating components are most important with respect to the resulting coating colour, whereas the colour of the substrate has a minor influence to the final colour impression. Therefore, in general, such white front-side coatings usually comprise a rather limited amount of components, such as a binder (which may be a glass component), a single white pigment and some fillers, such as opacifiers. Sometimes, an inorganic pigment may be added to compensate for a yellow tint, for example a blue pigment.

This is different in case the coating is a back-side coating, that is, a coating whose colour is perceived and determined through a substrate material, as is the case in the present disclosure. In the case of a soda-lime glass material, absorption within the glass material, due to impurities, such as $Fe_2O_3$, has to be taken into account.

Therefore, in order to provide a white, and bright, colour to the coated glass pane, the coating comprises at least two inorganic pigments in addition to the white pigment or white pigments. Surprisingly, however, even though the coating comprises inorganic pigments, still a very high brightness can be achieved.

According to an embodiment, the coating is applied to the back side of the glass pane. In the scope of the disclosure, the back side refers to that side of the glass pane that, during use of the home appliance or furniture, is facing away from the user.

The back side of the glass pane is usually easily identifiable even while the pane is not yet installed in an home appliance, as the side being opposite on the front side, while, when viewing the coated glass pane from the front side, any inscriptions or lettering appear not mirror-converted.

According to an embodiment, the soda-lime glass comprises a total iron content, given as $Fe_2O_3$, of at least 0.1 % in weight, preferably at least 0.5 % in weight, and at most 1 % in weight. This is advantageous, as in this case, a standard soda-lime glass can be used, without the need to use a high-purity soda-lime glass. Even though the iron content is rather high, resulting in a slightly green hue or tint of the glass material, the resulting white impression of the coated glass pane is still achieved. This is due to the coating comprising, as pointed out further above, two inorganic pigments in addition to a white pigment, which helps in compensating for the green hue of the glass material.

While iron, Fe, may be present in the glass material in the ferrous as well as the ferric oxidation state, in general, upon analysis of a glass material is made, the iron content is indicated simply as $Fe_2O_3$, which refers to the total iron oxide content of the glass material.

It may also be contemplated to add an opacifier to the coating. An opacifier, in the sense of the disclosure, is a further solid component of the coating, usually present as a powder. An opacifier may be particularly advantageous for reducing the overall coating thickness and may also help in lowering the amount of white pigment(s) in the coating. Also, an opacifier may be suitable for lowering the overall costs of the products, as usually pigments are more expensive than fillers, such as opacifiers. According to an embodiment, therefore, the coating comprises at least one opacifier. The opacifier can be present in an amount up to 5 wt%. Typical grain sizes for opacifiers range from 0.1 to 5 micro meter

According to a further embodiment, the coated glass pane is tempered, preferably thermally tempered. This is preferred in order to ensure a high mechanical strength of the glass pane, especially in application such as cooktop panels or hob tops.

According to an embodiment, the white pigment comprises $TiO_2$, $ZrO_2$, or a combination of both. It is repeated here that in the context of the disclosure, a "white pigment" is a pigment that imparts a white, opaque impression to a coating (i.e. a "white colour"), that white impression being due to light scattering. $TiO_2$, especially in the form of rutile, is a very preferred white pigment, as it has a very high refractive index and thus scattering is very effective. Also, $ZrO_2$ may be employed, which has a slightly lower refractive index, but may offer an advantage in certain settings compared to $TiO_2$ materials, as latter tend to degrade organic materials due to their photocatalytic properties.

According to a further embodiment of the coated glass pane wherein one of the inorganic pigments is a first inorganic pigment and is an oxide pigment comprising Fe, preferably an iron oxide, preferably $Fe_2TiO_4$ (which has a spinel structure), or $Fe_2O_3$, either doped or undoped, or a spinel pigment comprising Zn and iron, for example of the general formula $Zn(Al,Fe,Cr)_2O_4$, wherein this first inorganic pigment is preferably present in an amount from at least about 0.01 % in weight to at most about 3.5% in weight, and/or wherein one of the inorganic pigments is second inorganic pigment and is spinel pigment comprising cobalt, such as $Co(Al,Cr)_2O_4$ or $CoAl_2O_4$, preferably in an amount from at least about 0 % in weight to at most about 3 % in weight.

The first inorganic pigment, that is, an oxide pigment comprising Fe, preferably an iron oxide, preferably $FeTiO_4$ (which has a spinel structure), or $Fe_2O_3$, either doped or undoped, or a spinel pigment comprising Zn and iron, for example of the general formula $Zn(Al,Fe,Cr)_2O_4$, may be understood as a pigment that imparts a "red" colour to a coating. Referring to the CIEL*a*b*-system, a red colour may be understood as a colour with a positive sign of both the a* and the b* value, with a* having the greater value than b*. Commonly known "red pigments" are, for example, iron oxides. However, while iron oxides are common materials and essentially nontoxic, they do not provide very vivid colours. So, it may be preferred to use other materials, such as the pigment materials proposed further above.

The second inorganic pigment is a so-called spinel pigment, that is, having the general crystal structure of a spinel. Further, the second inorganic pigment is a spinel pigment comprising cobalt. Such a pigment may also be called a "blue pigment". Referring to the CIEL*a*b*-system once again, a blue colour may be understood as a colour with a negative sign of the b* value and a* being close to zero.

The above mentioned first and second inorganic pigments being present in the coating of the coated glass pane in the above indicated values is advantageous as in this manner, a tint of the substrate material may be compensated for so that the resulting impression of the coated glass pane is a white impression. It is to be noted that while it is advantageous for the coating to comprise a so-called "red pigment", a so-called "blue pigment" is not a mandatory component.

For example and according to a further embodiment, the coating comprises, in addition to the first inorganic pigment, a further inorganic pigment that comprises Ti and Ni and/or Sb as further metal (or metal ion) component, such as $(Cr, Sb, Ti)O_2$ or $(Ni, Sb, Ti)O_2$ or $(Ni, Ti)O_2$, which all crystallize in a rutile structure, and/or a spinel pigment comprising Fe and/or Cr, such as $MnFe_2O_4$, $Cr (Ni, Fe)_2O_4$ and/or $CuCr_2O_4$. The former inorganic pigment that comprises Ti and Ni and/or Sb may be understood and referred to as a pigment that imparts a "yellow" colour to a coating, while the latter pigment is a so-called "black pigment". Of course, the disclosure is not limited to the explicitly mentioned "yellow", "blue", "black" and "red" pigments whose overall formula has been indicated. Rather, other commonly used inorganic pigments known to the person skilled in the art may also be used.

According to an embodiment, the coating comprises at least one further inorganic pigment wherein preferably the further pigment comprises Ti and Ni and/or Sb as further metal (or metal ion) component, such as $(Cr, Sb, Ti)O_2$ or $(Ni, Sb, Ti)O_2$ or $(Ni, Ti)O_2$, and/or a spinel pigment comprising Fe and/or Cr, such as $MnFe_2O_4$, $Cr (Ni, Fe)_2O_4$ and/or $CuCr_2O_4$.

In the CIEL*a*b*-system, a yellow colour is a characterized by a positive b*-value, with a* being close to zero. A black colour is a colour with a low L* value and a* and b* values being close to zero. While for white pigments, a* and b* values are also close to zero, that is, with a value of less than +/- 2, white pigments are such that show no absorption in the visible range of electromagnetic radiation (i.e. within the range of 380 nm to 780 nm). Black pigments, in contrast, show a high absorption.

Such embodiments may be advantageous in order to compensate for a certain tint in the glass pane, in order to provide s very neutral, white impression of the glass pane when viewed from above, that is, through the glass material.

According to a further embodiment, a further coating is coated on the top of the at least one coating at least partially, the further coating having a dark or greyish colour, a thickness of from 5 μm to 20 μm and/or an opacity of 0.7 to 1.5.

Such an embodiment may be particularly preferred in case the at least one coating is not sufficiently opaque. As the at least one coating of the disclosure comprises at least one glass component, in other words, may be an enamel coating, the at least one coating may negatively affect the mechanical strength of the glass pane such, especially in case the at least one coating is, in use, a so-called back-side coating, that is, facing away from the customer or user of an appliance. Therefore, usually, such coatings comprising at least one glass component are applied as rather thin coatings, while the content in glass component and other components, such as pigments and/or fillers and/or opacifiers are carefully chosen so that the coating still has a good adhesion and/or overall mechanical stability such as scratch and/or abrasion resistance, while not negatively affecting the resulting mechanical strength of the coated glass pane. While in principle, a lower amount of the glass component, such as a glass frit, which acts as a binder, compared to the amount of pigment(s) and optional further components may be good to ensure a high optical density of the coating and also beneficial to the mechanical strength of the coated glass pane, such a coating may be insufficient in terms of adhesion and/or abrasion and/or scratch resistance. On the contrary, a higher amount in binder, i.e. the glass component, may be detrimental to both the optical density of the coating and the glass pane strength. Therefore, it may be advantageous to contemplate applying a further coating which acts as a shading. Preferably, this further coating has a white colour. However, generally, without being restricted to any specific embodiment of the disclosure, the further coating may have a dark or greyish colour.

Also generally, this further coating may have a thickness of from 5 μm to 20 μm and/or an opacity of 0.7 to 1.5.

According to a further embodiment, the coating is deposited adjacent to the circumferential edge, thereby forming a frame. In that way, the coated glass pane may be used as a window for home appliances such as an oven. The coated, not-see-through-part of the glass pane may serve as a cover for hiding further components of an appliance.

According to a further embodiment, the coating is applied to the back side of the glass pane. The back side is, according to the disclosure, that side face of the glass pane that, during later use of the glass pane in a home appliance or piece of furniture by a user, is facing away from the user. In that way, the glass pane itself acts as a protective cover to the coating.

According to a further embodiment, the coated glass pane has, measured in the portion, an optical density of about at least 2.8. Optical density, within the sense of the present disclosure, is determined according to ANSI PH2 19-1986 with the enamel coating layer facing upwards, preferably using a transmission densitometer model 361 T manufactured by X-rite.

According to a further embodiment, the coating has a thickness of about 8 $\mu$m to about 60 $\mu$m, preferably at least 10 $\mu$m and at most 55 $\mu$m, more preferably 12 $\mu$m to 48 $\mu$m. This is a fair compromise between a good mechanical strength of the coated glass pane and a sufficient optical density of the coating, that is, preferably an optical density of about at least 2.5, preferably at least 2.7, more preferably at least 2.8.

According to the disclosure it is preferred to apply the coating as a multiple layer coating, that is, coat a first sublayer of the coating and drying it, and then applying at least one further sublayer and drying it. While in principle a three- or four- or even five-sublayer coating may be contemplated, in case the coating is applied so as to comprise sublayers, a so-called double-layer coating (comprising only two sublayers) is most preferred.

Such a sublayer-coating may be advantageous as, as pointed out further above, it may be preferred to limit pigment content of the paste in order to ensure a good coating adhesion.

However, in that case, a single layer of the coating may not be sufficiently opaque. This may be overcome by applying the coating the form of a multiple sublayer coating, as explained above, wherein the two-sublayer coating - or double-layer coating - is most preferred. In any case, the overall thickness of the coating is preferably between 8 $\mu$m to about 60 $\mu$m, preferably at least 10 $\mu$m and at most 55 $\mu$m, more preferably between 12 $\mu$m and 48 $\mu$m.

The disclosure also pertains to a paste, preferably a paste for producing a coated glass pane, preferably a coated glass pane according to any embodiments of the present disclosure. The paste comprises

- a glass frit, preferably in an amount from at least about 33 % in weight to about at most 65 % in weight,
- a white pigment, preferably in an amount from about at least 30 % in weight to about at most 42 % in weight,
- at least two inorganic pigments, and
- an organic medium, preferably in an amount from about at least 15 % in weight to about at most 25 % in weight.

The white pigment and the at least two inorganic pigments may be any of the pigments as described further above.

In general, without being limited to any embodiment of the paste and/or the coated glass pane of the disclosure, the paste may comprise, in wt.-%:

| | |
|---|---|
| Glass Frit | 30 - 65 |
| "white" pigment | 25 - 45 |
| "red" pigment | 0.01 - 2.5 |
| "blue" pigment | 0 - 2 |
| Medium | 15-25 |

The reader is reminded here that "red" and "blue" pigments are to be understood as pigments imparting a certain colour to a coating and have been defined further above. Of course, and without being limited to any embodiment, a paste and/or the resulting coating may comprise more than one "red" or "blue", "black" and/or "yellow" pigment. In that case, a given amount indicated to be present in the paste/and or coating of the respective inorganic pigment refers to the sum of the "red" pigments (and so forth). However, in general, it may be preferred to use only one "red" and/or further inorganic pigment.

The coating comprises, as has been stated further above, at least one glass component. The paste component corresponding to the at least one glass component is the glass frit. The glass frit, in the sense of the disclosure, is a powdery component that may be a glass powder obtained in a melting and quenching process, and may also be denoted a glass flux. The paste is applied to one at least one of the side faces of the glass pane, preferably via a printing process, and fired. Upon firing, the glass frit melts and forms a glass component that acts as a binder to the further powder components of the paste/the coating, that is, the pigments and, if present, further components such as a filler and/or an opacifier.

In general, and without being limited to any of the embodiments of the coated glass pane of the disclosure, the coating may comprise, in weight percent:

| | |
|---|---|
| Glass component | 30 - 75 |
| "white" pigment | 25 - 64 |
| "red" pigment | 0.01 - 3.5 |
| "blue" pigment | 0 - 3 |

According to an embodiment of the paste, one of the inorganic pigments is a first inorganic pigment and is an oxide pigment comprising Fe, preferably an iron oxide, preferably $Fe_2O_3$, either doped or undoped, or a spinel pigment comprising Zn and iron, for example of the general formula $Zn(Al,Fe,Cr)_2O_4$, wherein this first inorganic pigment is preferably present in an amount from at least about 0.01 % in weight to at most about 2.5% in weight and/or wherein one of the inorganic pigments is second inorganic pigment and is spinel pigment comprising cobalt, such as $Co(Al,Cr)_2O_4$ or $CoAl_2O_4$, preferably in an amount from at least about 0 % in weight to at most about 2 % in weight. This corresponds, of course, to the amounts of those same pigments as components of the coating, with the pigment content being higher in the coating than in the paste, of course, as during drying and firing, any medium is burnt, leaving only inorganic compounds left in the coating.

According to an embodiment, the paste may comprise a fluxing agent, preferably in an amount of less than 8 % in weight, more preferably in an amount of less than 6 % in weight. Including a fluxing agent may be advantageous in order to provide for lower firing temperatures. This is not only cost-beneficial, but also beneficial in terms of mechanical strength of the coated glass pane. Also, as a glass flux lowers the firing temperature, the glass component can flow more easily, which results in a better coating structure and a smooth surface of a coating (and, thus, a better resistance against abrasion and scratching). A suitable fluxing agent comprises, but is not limited to, NaF.

In case a scratch test is performed, this is done according to the knowledge of the skilled person, in particular with Elcometer 3092 and 10 N force according to AS3894.4, EN 438-2, and/or ISO 4586-2. Good scratch resistance is considered for a coating that cannot be scratched with Elcometer pen under 10 N force. According to an embodiment, of the coated glass pane of the disclosure generally, without being limited to any of the special embodiments of the disclosure, has a scratch resistance of the coating in a test according to AS3894.4, EN 438-2, and/or ISO 4586-2 such that the coating shows no scratches with the Elcometer pen for a force of under 10 N.

According to a further embodiment, the paste - and, in turn, the resulting coating - comprises an opacifier, preferably in an amount of 0,5 % to 8 %, preferably 1 % to 3 % in weight. Preferably the opacifiers consist of -preferably uncoloured- inorganic particles with a particle size of between 0,2 $\mu$m and 2 $\mu$m. Most preferably the opacifier are silicates and multicomponent silicates which do not inher supplementary colour.
In order to help good fusability of the enamel, a fusing agent such as $BaSO_4$ and/or $CaF_2$ may be added.

Also, according to a further embodiment of the paste, the white pigment comprises $TiO_2$, $ZrO_2$ of a combination of both, as the resulting coating.

The present disclosure also relates to a process for manufacturing a coated glass pane, preferably a coated glass pane according to any embodiment of the disclosure. The Process comprises

- providing a glass pane comprising two side faces and a circumferential edge, wherein the glass pane is a soda-lime glass pane having a thickness between at least 3 mm and at most 8 mm,
- providing a paste, preferably a paste according to any embodiment of a paste of the disclosure,
- applying the coating to at least one of the side face of the glass pane at least partially, preferably by printing, more preferably by screen printing,
- firing of the coating, preferably during thermal prestressing of the glass pane.

Thermal prestressing is understood, in the context of the disclosure, to relate to a process of thermal toughening of a glass pane, in order to obtain a so-called tempered glass. In the sense of the disclosure, prestressing, toughening and tempering may be used as synonyms.

The disclosure also relates to a coated glass pane, preferably a coated glass pane according to an embodiment of the disclosure, that is produced or producible in a process according to the disclosure.

The disclosure also relates to the use of a coated glass pane, preferably a coated glass pane according to an embodiment of the disclosure and/or produced or producible in a process according to the disclosure as a cover panel in home appliances, for example as a cover panel or a cooktop panel or an oven door or an oven control panel or in a hob top or as dishwasher door cover, or in bathroom scales, shower walls, as a piece of furniture (office or bathroom furniture), or a cover panel for a dividing wall or a partition panel.

Examples

The invention will now be further explained in the following examples.

The inventors have found that coating composition and, thus, the corresponding paste composition may have to be adjusted in order to compensate for colour shades of the glass pane used and/or its thickness. That is, for a glass pane of 8 mm thickness a stronger tint has to be compensated than for a 4 mm thick glass pane of the same composition. Of course, this also strongly depends on the impurity level of the glass composition, especially in terms of iron content of the glass composition. In general, suitable compositional ranges for 8 mm thick glass panes may be, according to an exemplary embodiment:

Table 1

|  | Min, wt% | Max, wt% |
|---|---|---|
| Glass Frit | 30 | 65 |
| White pigment | 20 | 45 |
| Red pigment | 0.03 | 2.5 |
| Blue pigment | 0.02 | 2 |
| Medium | 25 | 40 |

Here, the terms "white pigment", "red pigment" and "blue pigment" refer to the classes of different pigments as defined further above.

A slightly different compositional ranges has been found to be particularly suitable for glass pane that are only 4 mm thick:

Table 2

|  | Min, wt% | Max, wt% |
|---|---|---|
| Glass Frit | 30 | 65 |
| White pigment | 20 | 45 |
| Red pigment | 0.03 | 2 |
| Blue pigment | 0.02 | 1.1 |
| Medium | 15 | 25 |

A medium, in the sense of the disclosure, is a liquid component that is used in paste in order to provide them with s suitable viscosity for the desired application process and it may also aid in fixing the applied paste after drying of the coating. Such media for example used in screen printing pastes are known to the person skilled in the art.

Suitable glass frits are preferably such glass frits that show a rather low melting point. For example, in the scope of the present disclosure, glass frits comprising zinc borosilicate glass or zinc bismuth borosilicate glass or bismuth borosilicate may be preferred.

A suitable overall range for a glass frit according to an embodiment of the present disclosure comprises the following components, in wt.-% on an oxide basis:

Table 3

| $SiO_2$ | 20 - 70 wt% |
|---|---|
| $Al_2O_3$ | 0 - 20 wt % |
| $B_2O_3$ | 0-35 wt% |
| $Li_2O+Na_2O+K_2O$ | 0-30 wt%, preferably 3 - 25 wt% |
| $MgO+CaO+SrO+BaO$ | 0-25 wt%, preferably 0-15 wt% |
| $ZnO$ | 0-15 wt% |
| $TiO_2+ZrO_2$ | 0-10 wt% |
| $Bi_2O_3$ | 0-65 wt% |
| F | 0-3 wt% |

In the following table, several examples of suitable glass frits for coated glass panes according to embodiments of the disclosure are listed. All data are given in wt.-% on an oxide basis.

Table 4

| Component | 1 | 2 | 3 | 4 |
|---|---|---|---|---|
| $Al_2O_3$ | 0.2 | 1.6 | 0.8 | 1.0 |

9

(continued)

| Component | 1 | 2 | 3 | 4 |
|---|---|---|---|---|
| $B_2O_3$ | 4.9 | 7.9 | 15.1 | 10.8 |
| $Bi_2O_3$ | 52.0 | | 0.0 | 0.0 |
| CaO | | 0.0 | 0.1 | 0.2 |
| $CeO_2$ | | 0.6 | | 0.3 |
| $K_2O$ | 0.6 | 0.1 | 3.5 | 1.3 |
| $Li_2O$ | 0.1 | 1.1 | 2.6 | 1.7 |
| $Na_2O$ | 3.3 | 5.4 | 5.6 | 6.8 |
| $P_2O_5$ | | 0.1 | 0.1 | 0.1 |
| $SiO_2$ | 27.0 | 26.7 | 33.0 | 33.0 |
| $TiO_2$ | 2.2 | 39.6 | 29.0 | 30.0 |
| ZnO | 9.6 | 15.8 | 10.0 | 12.8 |
| F | 0.2 | 1.0 | | 1.1 |
| $Nb_2O_5$ | | | 0.1 | 0.0 |
| Sum | 100.0 | 100.0 | 100.0 | 99.2 |

With these glass frits, pastes could be obtained as listed in the following table. All data are given in wt.-%. Examples 6 and 7 in the below table 5 are comparative examples (CE), whereas examples 1 to 5 are examples according to embodiments of the disclosure. It is to be noted here that in general, as indicated for the example of the paste 4 in table 5, two different glass frits may be used. Also, any deviations from the 100 wt.-% sum are due to rounding errors.

Table 5

| Example no. | 1 | 2 | 3 | 4 | 5 | 6 CE | 7 CE |
|---|---|---|---|---|---|---|---|
| First glass frit | Table 4, No1 | Table 4, No2 | Table 4, No2 | Table 4, No3 | Table 4, No 2 | Table 4, No1 | Table 4, No1 |
| | 35.19 | 44.058 | 41.82 | 39.64 | 35.62 | 34.64 | 34.64 |
| Second glass frit | | | | Table 4, No 4 | | | |
| | | | | 14.39 | | | |
| White pigment | 36.09 | 31.62 | 33.86 | 21.48 | 38.67 | 39.43 | 39.43 |
| Red pigment | 0.07 | 0.09 | 0.09 | 0.09 | 0.13 | | 0.0012 |
| Blue pigment | 0.04 | 0.032 | 0.03 | 0.04 | 0.04 | | |
| Yellow pigment | | | | | | | |
| Black pigment | | | | | | | |
| Organic medium | 28.61 | 24.20 | 24.20 | 24.36 | 25.54 | 25.93 | 25.93 |
| Sum | 100 | 100 | 100 | 100 | 100 | 100 | 100 |
| Properties | | | | | | | |
| Medium pasting ratio (powder; organic) | 10:4.01 | 10:3.2 | 10:3.2 | 10:3.22 | 10:3.43 | 10:2.86 | 10:2.86 |

The difference in the colour of glass panes of different thicknesses and/or different Fe-content is illustrated by the exemplary L*a*b*-values in the following table:

Table 2

| Soda lime | L | Range | a | Range | b | Range |
|---|---|---|---|---|---|---|
| No 1,4 mm | 83.58 | 80 to 86 | -0.21 | -1.5 to 0.6 | -6.41 | -7.5 to -5 |
| No 2, 8 mm | 71.31 | 68 to 74 | -2.07 | -4 to -1 | -4.69 | -6.5 to -3.5 |
| No 3, 6 mm | 83.58 | 80 to 86 | -0.21 | -1.5 to 0.6 | -6.41 | -7.5 to -5 |

As can be seen, these different colour coordinates may result in an adjustment of the paste/coating composition in order to ensure the desired light, colour neutral, "whitish" appearance of the coated glass pane.

Finally, in below table 7, examples of coated glass panes are listed. CE refers to comparative example.

| | 1 | 2 | 3 | 4 | 5 | 6 | 7 | 8 CE | 9 CE |
|---|---|---|---|---|---|---|---|---|---|
| Substrate (Table 6) | No 1 | No 1 | No 1 | No 2 | No 1 | C | No 2 | No 1 | No 1 |
| First sublayer (Table 5) | No 1 | No 2 | No3 | No 4 | No 5 | No 1 | No 5 | No 5 | No 6 |
| Second sublayer (Table 5) | No 1 | No 2 | No3 | No 4 | No 5 | No 4 | No 5 | | |
| Further coating (Table 5) | No 6 | No 6 | No 6 | | | | | | |
| | | | | | | | | | |
| Screen-printing | | | | | | | | | |
| Sreen mesh size first sublayer | 90T | 77T | 77T | 43-80 | 43-80 | 43-80 | 43-80 | 77-55 | 77-55 |
| Screen mesh size second sublayer | 62T | 77T | 77T | 43-80 | 43-80 | 43-80 | 43-80 | | |
| Screen mesh size Further coating | 90T | 90T | 90T | | | | | | |
| | | | | | | | | | |
| Firing conditions | | | | | | | | | |
| Tmax temperature (°C) / time (min) | 705°C / 3.2 | 705°C / 3.2 | 705°C / 3.2 | 705°C /3.2 | 705°C / 3.2 | 705°C / 3.2 | 705°C / 3.2 | 705°C / 3.2 | 680°C/ 15min |
| | | | | | | | | | |
| Properties measured on substrate | | | | | | | | | |
| Scratch resistance, 10N force | Good | Good | Good | Good | Good | Good | Good | Good | Good |
| Optical density | | 1.75 | 2.25 | 2.3 | 2.4 | 2.35 | >2 | 1.13 | 1.14 |
| Colour coordinates | | | | | | | | | |
| SCI, L* value | 70.49 | 67.76 | 67.94 | 58.57 | 70.59 | 63.3 | 69 | 70.34 | 70.31 |
| SCI, a* value | 0.03 | 0.56 | 0.44 | 0.24 | 0.04 | -0.52 | 0.04 | -1.47 | -1.5 |
| SCI, b* value | 2.33 | 1.74 | 1.49 | 0.74 | 0.54 | 1.67 | 0.54 | 2.71 | 2.73 |

(continued)

|  | 1 | 2 | 3 | 4 | 5 | 6 | 7 | 8 CE | 9 CE |
|---|---|---|---|---|---|---|---|---|---|
|  |  |  |  |  |  |  |  |  |  |
| Total layer thickness | < 48 μm | < 48 μm | < 48 μm | < 48 μm | < 48 μm | < 48 μm | < 48 μm |  < 15 um | < 15 um |

In table 7, SCI refers to the mode in which the colour coordinates were determined. Also, the total layer thickness of examples 1 to 7 was less than 48 μm, and more than 15 μm.

Description of drawings

The invention will now be further explained with reference to the following figures. In the figures, like reference numerals refer to like or corresponding features. The figures show:

Fig. 1    a perspective plain view of a coated glass pane according to an embodiment, and

Fig. 2    a sectional view of a coated glass pane according to an embodiment.

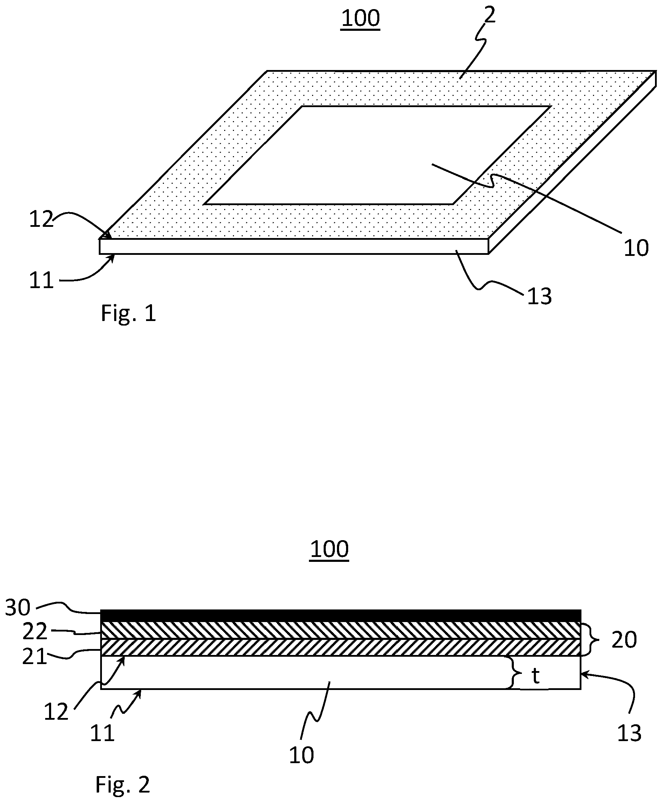

Fig. 1 depicts, in a schematic and not drawn to scale way, coated glass pane 100 comprising glass pane 10 (which may also referred so as a glass substrate). Glass pane 10 comprises two side faces 11, 12 and circumferential edge 13. At least one coating 20 (not denoted here) has been deposited on at least one of side faces 11, 12, here on side face 12, in at least one portion thereof, here portion 2 of side face 12. Glass pane 10 is a soda-lime glass pane having a thickness between at least 3 mm and at most 8 mm. If is to be noted here that coating 20 is deposited adjacent to circumferential edge 13, thereby forming a frame. However, it is also possible and may be preferred to deposit coating 20 in another portion of on of the side faces 11, 12.
The structure of coating 20 can be seen in the schematic and not drawn to scale depiction of fig. 2, a sectional view of a coated glass pane 100 in portion 2 of coated glass pane 100/side face 12 in which coating 20 is deposited. As in the depiction of fig. 1, coated glass pane 100 comprises glass pane 10 (or glass substrate) comprising two side face 11, 12 and circumferential edge 13. Generally, without being limited to the exemplary embodiment shown here, at least one coating 20 is deposited on at least one of side faces 11, 12 in at least one portion 2 of one of the side faces. However, it is also possible that a coating according to embodiments is applied on both side faces 11, 12, in a portion 20 thereof or covering all of the surface of the side face or side faces 11, 12. Also, it is possible to apply different coatings 20 according to embodiments in different portions 2 of one or both of the side faces 11, 12.
Glass pane 10 is a soda-lime glass pane having a thickness between at least 3 mm, for example 4 mm, and at most 8 mm. Preferred thicknesses are 4 mm, 6 mm and 8 mm, for example. The thickness of the glass pane is understood as the distance between side faces 11, 12, which are, in general, arranged parallel to each other, which means that the direction of their respective normal vectors are at an angle of no more than 5°. Preferably, they are at an angle of 0°. Thickness t has been indicated in fig. 2 as well. Coating 20 is an enamel coating that comprises at least one glass component, which may be a glass frit or may be obtained from such a glass frit by way of melting during firing of an applied paste. Further, coating 20 comprises a white pigment and at least two inorganic pigments. Coating 20 comprises two sublayers 21, 22. It is to be noted here that generally, without being limited to the exemplary embodiment shown in fig. 2, coating 20 may comprise only one sublayer 21, especially in case of glass pane 10 thicknesses of less than 4.5 mm. The colour of coated glass pane 100 in the at least one portion 2 measured through glass pane 10 is given by the following colour coordinates in the CIE L*a*b*-system:

$$-0.4 < a^* < 0.4$$

$$0 < b^* < 3$$

$$L^* > 60.$$

Coated glass pane 100 may be a thermally tempered (or prestressed) coated glass pane. Preferably, thermal toughening (also denoted as tempering or thermal tempering) may be effected during firing of the coating.
In the exemplary embodiment of a coated glass pane 100 shown in fig. 2, coating 20 comprises two sublayers 21, 22. Further, coated glass pane 100 comprises a further coating 30 which is coated an top of the at least one coating 20 at least partially. In the depiction of fig. 2, further coating 30 is deposited on all of coating 20. Such a further coating 30 may be advantageous in case coating 20 is not sufficiently optically dense (or opaque), in order to obtain the desired optical density of about at least 2.8 of the coated glass pane in portion 20 according to a preferred embodiment.

Coating 20 has been applied to side face 12 of glass pane 10. Side face 12 may be understood as the back side of glass pane 10, that is, that side of glass pane 10/coated glass pane 100 that, during use, faces away from the user. Coating 20 may therefore be understood as a back side coating. Such an embodiment may be preferred as in that way, the glass pane 10 acts as a protection cover for the coating.

Reference numerals

| 10 | Glass pane |
| --- | --- |
| 11, 12 | Side faces of glass pane |
| 13 | Circumferential edge of glass pane |
| 2 | Portion of side face of glass pane |
| 100 | Coated glass pane |
| 20 | Coating |
| 21, 22 | Sublayers of coating |
| 30 | Further coating |
| t | Thickness |

**Claims**

1. A coated glass pane (100) for a home appliance or piece of furniture comprising:

   - a glass pane (10) comprising two side faces (11, 12) and a circumferential edge (13) and
   - at least one coating (20) deposited on at least one of the side face (11, 12) in at least a portion (2) thereof,
   wherein the glass pane (10) is a soda-lime glass pane having a thickness between at least 3 mm and at most 8 mm,
   wherein the coating (20) is an enamel coating comprising at least one glass component, a white pigment and at least two inorganic pigments,
   wherein the coating (20) comprises at least one sublayer (21),
   and wherein the colour of the coated glass pane (100) in the at least one portion (2) measured through the glass pane (10) is given by the following colour coordinates in the CIE L*a*b*-system:

$$-0.4 < a^* < 0.4$$

$$0 < b^* < 3$$

$$L^* > 60$$

2. The coated glass pane (100) according to claim 1, wherein the thickness of the glass pane (10) is at least 4.5 mm and the coating (20) comprises the at least one sublayer (21) and a further sublayer (22).

3. The coated glass pane (100) according to any of claims 1 or 2, wherein the coating (20) is applied to the operational back side (12) of the glass pane (10).

4. The coated glass pane (100) according to any of claims 1 to 3, wherein the soda-lime glass comprises a total iron content, given as $Fe_2O_3$, of at least 0.1 % in weight, preferably at least 0.5 % in weight, and at most 1 % in weight.

5. The coated glass pane (100) according to any of claims 1 to 4, wherein the coating (20) comprises at least one opacifier.

6. The coated glass pane (100) according to any of claims 1 to 5, wherein the coated glass pane (100) is tempered, preferably thermally tempered.

7. The coated glass pane (100) according to any of claims 1 to 6, wherein the white pigment comprises $TiO_2$, $ZrO_2$, or a combination of both.

8. The coated glass pane (100) according to any of claims 1 to 7, wherein one of the inorganic pigments is a first inorganic pigment and is an oxide pigment comprising Fe, preferably an iron oxide, preferably $Fe_2TiO_4$ or $Fe_2O_3$, either doped or undoped, or a spinel pigment comprising Zn and iron, for example of the general formula $Zn(Al,Fe,Cr)_2O_4$, wherein this first inorganic pigment is preferably present in an amount from at least about 0.01 % in weight to at most about 3.5% in weight, and/or wherein one of the inorganic pigments is second inorganic pigment and is spinel pigment comprising cobalt, such as $Co(Al,Cr)_2O_4$ or $CoAl_2O_4$, preferably in an amount from at least about 0 % in weight to at most about 3 % in weight.

9. The coated glass pane (100) according to any of claims 1 to 8, wherein the coating (20) comprises at least one further inorganic pigment, wherein preferably the further inorganic pigment comprises Ti and Ni and/or Sb as further metal (or metal ion) component, such as $(Cr, Sb, Ti)O_2$ or $(Ni, Sb, Ti)O_2$ or $(Ni,Ti)O_2$, and/or is a spinel pigment comprising Fe and/or Cr, such as $MnFe_2O_4$, $Cr(Ni, Fe)_2O_4$ and/or $CuCr_2O_4$.

10. The coated glass pane (100) according to any of claims 1 to 9, wherein a further coating (30) is coated on top of the at least one coating (20) at least partially, the further coating having a dark or greyish colour, a thickness of from 5 $\mu$m to 20 $\mu$m and an opacity of 0.7 to 1.5.

11. The coated glass pane (100) according to any of claims 1 to 10, comprising at least one of the following features:

    - the coating (20) is deposited adjacent to the circumferential edge (13), thereby forming a frame,
    - the coated glass pane (100), measured in the portion (20), has an optical density of about at least 2.8,
    - the coating (20) has a thickness of about 8 $\mu$m to about 60 $\mu$m, preferably at least 10 $\mu$m and at most 55 $\mu$m, more preferably of about 12 $\mu$m to about 48 $\mu$m.

12. A paste, preferably for producing a coating for a coated glass pane (100), preferably a coated glass pane (100) according to any of claims 1 to 11, comprising

    - a glass frit, preferably in an amount from at least about 33 % in weight to about at most 65 % in weight,
    - a white pigment, preferably in an amount from about at least 20 % in weight to about at most 45 % in weight,
    - at least two inorganic pigments, and
    - an organic medium, preferably in an amount from about at least 15 % in weight to about at most 25 % in weight.

13. The paste according to claim 12, comprising at least one of the following features:

    - one of the inorganic pigments is a first inorganic pigment and is an oxide pigment comprising Fe, preferably an iron oxide, $Fe_2TiO_4$ or $Fe_2O_3$, either doped or undoped, or a spinel pigment comprising Zn and iron, for example of the general formula $Zn(Al,Fe,Cr)_2O_4$, wherein this first inorganic pigment is preferably present in an amount from at least about 0.01 % in weight to at most about 2.5% in weight and/or wherein one of the inorganic pigments is second inorganic pigment and is spinel pigment comprising cobalt, such as $Co(Al,Cr)_2O_4$ or $CoAl_2O_4$, preferably in an amount from at least about 0 % in weight to at most about 2 % in weight,
    - the paste comprises at least one further inorganic pigment, wherein preferably the further inorganic pigment comprises Ti and Ni and/or Sb as further metal (or metal ion) component, such as $(Cr, Sb, Ti)O_2$ or $(Ni, Sb, Ti)O_2$ or $(Ni,Ti)O_2$, and/or is a spinel pigment comprising Fe and/or Cr, such as $MnFe_2O_4$, $Cr(Ni, Fe)_2O_4$ and/or $CuCr_2O_4$,
    - the paste comprises a fluxing agent, preferably in an amount of less than 8 % in weight, more preferably in an amount of less than 6 % in weight,
    - the paste comprises an opacifier,
    - the white pigment comprises $TiO_2$, $ZrO_2$ of a combination of both.

14. A process for manufacturing a coated glass pane (100), preferably a coated glass pane (100) according to any of claims 1 to 11, comprising

- providing a glass pane (10) comprising two side faces (11, 12) and a circumferential edge (13), wherein the glass pane (10) is a soda-lime glass pane having a thickness (t) between at least 3 mm and at most 8 mm,
- providing a paste, preferably a paste according to any of claims 12 or 13,
- applying the coating (20) to at least one of the side face (11, 12) of the glass pane (10) at least partially, preferably by printing, more preferably by screen printing,
- firing of the coating (20), preferably during thermal prestressing of the glass pane.

15. A coated glass pane (100), preferably a coated glass pane (100) according to any of claims 1 to 11, produced or producible in a process according to claim 14.

16. Use of a coated glass pane (100) according to any of claims 1 to 11 or 15 and/or produced or producible in a process according to claim 14 as a cover panel in home appliances, for example as a cover panel or a cooktop panel or an oven door or an oven control panel or in a hob top or as dishwasher door cover, or in bathroom scales, as a piece of furniture, or a cover panel for a dividing wall or a partition panel.

**Amended claims in accordance with Rule 137(2) EPC.**

1. A coated glass pane (100) for a home appliance or piece of furniture comprising:

   - a glass pane (10) comprising two side faces (11, 12) and a circumferential edge (13) and
   - at least one coating (20) deposited on at least one of the side face (11, 12) in at least a portion (2) thereof,

   wherein the glass pane (10) is a soda-lime glass pane having a thickness between at least 3 mm and at most 8 mm,
   wherein the soda-lime glass comprises a total iron content, given as $Fe_2O_3$, of at least 0.1 % in weight,
   wherein the coating (20) is an enamel coating comprising at least one glass component, a white pigment and at least two inorganic pigments,
   wherein the coating (20) comprises at least one sublayer (21),
   and wherein the colour of the coated glass pane (100) in the at least one portion (2) measured through the glass pane (10) is given by the following colour coordinates in the CIE L*a*b*-system:
   -0.4 < a* < 0.4
   0 < b* < 3
   L* > 60
   wherein one of the inorganic pigments is a first inorganic pigment and is an oxide pigment comprising Fe, preferably an iron oxide, preferably $Fe_2TiO_4$ or $Fe_2O_3$, either doped or undoped, or a spinel pigment comprising Zn and iron
   and wherein one of the inorganic pigments is a second inorganic pigment and is a spinel pigment comprising cobalt,

2. The coated glass pane (100) according to claim 1, wherein the thickness of the glass pane (10) is at least 4.5 mm and the coating (20) comprises the at least one sublayer (21) and a further sublayer (22).

3. The coated glass pane (100) according to any of claims 1 or 2, wherein the coating (20) is applied to the operational back side (12) of the glass pane (10).

4. The coated glass pane (100) according to any of claims 1 to 3, wherein the soda-lime glass comprises a total iron content, given as $Fe_2O_3$, of at least 0.5 % in weight, and at most 1 % in weight.

5. The coated glass pane (100) according to any of claims 1 to 4, wherein the coating (20) comprises at least one opacifier.

6. The coated glass pane (100) according to any of claims 1 to 5, wherein the coated glass pane (100) is tempered, preferably thermally tempered.

7. The coated glass pane (100) according to any of claims 1 to 6, wherein the white pigment comprises $TiO_2$, $ZrO_2$, or a combination of both.

8. The coated glass pane (100) according to any of claims 1 to 7, wherein the first inorganic pigment is present in an amount from at least about 0.01 % in weight to at most about 3.5% in weight, and/or the second inorganic pigment is present in an amount from at most about 3 % in weight.

9. The coated glass pane (100) according to any of claims 1 to 8, wherein the coating (20) comprises at least one further inorganic pigment, wherein preferably the further inorganic pigment comprises Ti and Ni and/or Sb as further metal (or metal ion) component, such as $(Cr, Sb, Ti)O_2$ or $(Ni, Sb, Ti)O_2$ or $(Ni, Ti)O_2$, and/or is a spinel pigment comprising Fe and/or Cr, such as $MnFe_2O_4$, $Cr (Ni, Fe)_2O_4$ and/or $CuCr_2O_4$.

10. The coated glass pane (100) according to any of claims 1 to 9, wherein a further coating (30) is coated on top of the at least one coating (20) at least partially, the further coating having a dark or greyish colour, a thickness of from 5 $\mu$m to 20 $\mu$m and an opacity of 0.7 to 1.5.

11. The coated glass pane (100) according to any of claims 1 to 10, comprising at least one of the following features:

   - the coating (20) is deposited adjacent to the circumferential edge (13), thereby forming a frame,
   - the coated glass pane (100), measured in the portion (20), has an optical density of about at least 2.8,
   - the coating (20) has a thickness of about 8 $\mu$m to about 60 $\mu$m, preferably at least 10 $\mu$m and at most 55 $\mu$m, more preferably of about 12 $\mu$m to about 48 $\mu$m.

12. A paste for producing a coated glass pane (100) according to any of claims 1 to 11, comprising

   - a glass frit, preferably in an amount from at least about 33 % in weight to about at most 65 % in weight,
   - a white pigment, preferably in an amount from about at least 20 % in weight to about at most 45 % in weight,
   - at least two inorganic pigments, wherein one of the inorganic pigments is a first inorganic pigment and is an oxide pigment comprising Fe, preferably an iron oxide, $Fe_2TiO_4$ or $Fe_2O_3$, either doped or undoped, or a spinel pigment comprising Zn and iron, for example of the general formula $Zn(Al, Fe, Cr)_2O_4$, and wherein one of the inorganic pigments is a second inorganic pigment and is a spinel pigment comprising cobalt, such as $Co(Al, Cr)_2O_4$ or $CoAl_2O_4$,
   and
   - an organic medium, preferably in an amount from about at least 15 % in weight to about at most 25 % in weight.

13. The paste according to claim 12, comprising at least one of the following features:

   - wherein the first inorganic pigment is preferably present in an amount from at least about 0.01 % in weight to at most about 2.5% in weight and/or wherein the second inorganic pigment is present in an amount to at most about 2 % in weight,
   - the paste comprises at least one further inorganic pigment, wherein preferably the further inorganic pigment comprises Ti and Ni and/or Sb as further metal (or metal ion) component, such as $(Cr, Sb, Ti)O_2$ or $(Ni, Sb, Ti)O_2$ or $(Ni, Ti)O_2$, and/or is a spinel pigment comprising Fe and/or Cr, such as $MnFe_2O_4$, $Cr (Ni, Fe)_2O_4$ and/or $CuCr_2O_4$,
   - the paste comprises a fluxing agent, preferably in an amount of less than 8 % in weight, more preferably in an amount of less than 6 % in weight,
   - the paste comprises an opacifier,
   - the white pigment comprises $TiO_2$, $ZrO_2$ of a combination of both.

14. A process for manufacturing a coated glass pane (100) according to any of claims 1 to 11, comprising

   - providing a glass pane (10) comprising two side faces (11, 12) and a circumferential edge (13), wherein the glass pane (10) is a soda-lime glass pane having a thickness (t) between at least 3 mm and at most 8 mm,
   - providing a paste, preferably a paste according to any of claims 12 or 13,
   - applying the coating (20) to at least one of the side face (11, 12) of the glass pane (10) at least partially, preferably by printing, more preferably by screen printing,
   - firing of the coating (20), preferably during thermal prestressing of the glass pane.

15. Use of a coated glass pane (100) according to any of claims 1 to 11 as a cover panel in home appliances, for example as a cover panel or a cooktop panel or an oven door or an oven control panel or in a hob top or as dishwasher door cover, or in bathroom scales, as a piece of furniture, or a cover panel for a dividing wall or a partition panel.

**100**

2

12

11

10

13

Fig. 1

**100**

30

22

21

12

11

10

20

t

13

Fig. 2

Europäisches
Patentamt

European
Patent Office

Office européen
des brevets

# EUROPEAN SEARCH REPORT

Application Number

**EP 23 19 9318**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/135467 A1 (MENKE-BERG YVONNE [DE] ET AL) 5 May 2022 (2022-05-05) | 1-3,5-16 | INV. C03C3/066 |
| Y | * paragraphs [0002], [0038], [0049], [0056], [0122], [0132], [0137], [0138], [0158]; tables 2,3,6 * | 4 | C03C3/068 C03C8/04 C03C8/06 C03C8/08 |
| X | EP 0 794 158 A1 (NIPPON ELECTRIC GLASS CO [JP]) 10 September 1997 (1997-09-10) * page 6, line 35 – line 57; tables 1,2 * | 1,12-16 | C03C8/14 C03C8/16 C03C8/20 C03C17/00 |
| X | EP 0 771 765 A1 (NIPPON ELECTRIC GLASS CO [JP]) 7 May 1997 (1997-05-07) * page 6, line 50 – page 7, line 10; tables 1,2 * | 1,2, 13-16 | C03C17/34 |
| X,D | US 2013/092049 A1 (LEE KUN-MU [TW] ET AL) 18 April 2013 (2013-04-18) * paragraphs [0005], [0016], [0023], [0026] – [0032]; table 1 * | 1,14-16 | |
| Y | US 2023/117230 A1 (SCHNEIDER MEIKE [DE] ET AL) 20 April 2023 (2023-04-20) * paragraphs [0048], [0050], [0083], [0124], [0125], [0131], [0135] – [0137], [0139] * | 4 | **TECHNICAL FIELDS SEARCHED (IPC)** C03C |

The present search report has been drawn up for all claims

| Place of search | Date of completion of the search | Examiner |
|---|---|---|
| Munich | 4 March 2024 | King, Ruth |

EPO FORM 1503 03.82 (P04C01)

18

## ANNEX TO THE EUROPEAN SEARCH REPORT
## ON EUROPEAN PATENT APPLICATION NO.

EP 23 19 9318

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | | | Publication date | Patent family member(s) | | | Publication date |
|---|---|---|---|---|---|---|---|
| US 2022135467 | A1 | | 05-05-2022 | BR | 102021022289 | A2 | 17-05-2022 |
| | | | | CN | 114436541 | A | 06-05-2022 |
| | | | | DE | 102020129161 | A1 | 05-05-2022 |
| | | | | EP | 3995462 | A1 | 11-05-2022 |
| | | | | US | 2022135467 | A1 | 05-05-2022 |
| EP 0794158 | A1 | | 10-09-1997 | CA | 2199076 | A1 | 05-09-1997 |
| | | | | DE | 69700315 | T2 | 04-11-1999 |
| | | | | EP | 0794158 | A1 | 10-09-1997 |
| | | | | JP | 3436291 | B2 | 11-08-2003 |
| | | | | JP | H09238841 | A | 16-09-1997 |
| | | | | US | 5866239 | A | 02-02-1999 |
| EP 0771765 | A1 | | 07-05-1997 | CA | 2189380 | A1 | 03-05-1997 |
| | | | | DE | 69601299 | T2 | 20-05-1999 |
| | | | | EP | 0771765 | A1 | 07-05-1997 |
| | | | | JP | 3858292 | B2 | 13-12-2006 |
| | | | | JP | H09183631 | A | 15-07-1997 |
| US 2013092049 | A1 | | 18-04-2013 | CN | 103044974 | A | 17-04-2013 |
| | | | | TW | 201315779 | A | 16-04-2013 |
| | | | | US | 2013092049 | A1 | 18-04-2013 |
| US 2023117230 | A1 | | 20-04-2023 | CN | 115991945 | A | 21-04-2023 |
| | | | | DE | 102021126968 | A1 | 20-04-2023 |
| | | | | EP | 4166616 | A1 | 19-04-2023 |
| | | | | JP | 2023060837 | A | 28-04-2023 |
| | | | | KR | 20230055377 | A | 25-04-2023 |
| | | | | US | 2023117230 | A1 | 20-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130092049 A1
- EP 1108691 B1
- CN 108641479 B
- US 5719091 A
- WO 2016175871 A1